# EUROPEAN PATENT SPECIFICATION

(11) **EP 1 331 810 B1**
(45) Date of publication and mention of the grant of the patent: **12.11.2008**
(21) Application number: 01967787.1
(22) Date of filing: 21.09.2001
(51) Int. Cl.: H04N 7/16, H04N 5/445, H04N 5/45

(54) **CONTROLLING A RECEIVER**
EMPFÄNGERSTEUERUNG
CONTROLE D'UN RECEPTEUR

(30) Priority: 26.09.2000 JP 2000292302
(43) Date of publication of application: 30.07.2003
(73) Proprietor: MATSUSHITA ELECTRIC INDUSTRIAL CO., LTD., Kadoma-shi, Osaka 571-8501 (JP)
(72) Inventor: KITATORA, Hirohito, Kita-ku, Osaka-shi, Osaka 531-0063 (JP); KOBAYASHI, Senju, Kouhoku-ku, Yokohama-shi, Kanagawa 222-0 (JP); TANAKA, Yoshihisa, Itabashi-ku, Tokyo 174-0074 (JP); KOHNO, Tetsutaro, Aoba-ku, Yokohama-shi, Kanagawa 225-0011 (JP)
(74) Representative: Betten & Resch
(86) International application number: PCT/JP2001/008248
(87) International publication number: WO 2002/028096

(56) References cited:
- WO-A-00/10327
- WO-A-01/52541
- WO-A-99/55090
- JP-A- 10 032 802
- JP-A- 10 304 327
- JP-A- 11 136 649
- JP-A- 11 275 484
- JP-A- 2001 285 743
- US-A- 5 933 192

## Description

### Field of the Invention

The present invention relates to a television set, a set-top box, and other receiving devices. Especially, the invention relates to a receiving device that has two or more receivers with different functions.

### Background of the Invention

Conventionally, a receiving device such as a television set or a set-top box had only one receiver. Among VTRs (video tape recorders), there were some that had two receivers or tuners. And, while users view and listen to a program, such VTRs had a function allowing the recording of a program on a different channel. However, the purpose of the two receivers or tuners was to select either one of program signals from the frequencies that were transmitted. Such receivers or tuners had basically the same functions.

WO 99/55090 discloses a digital television system which receives control data from a source and uses the control data to switch channels on a digital television. The digital television system includes a memory which stores computer executable process steps and channel switching circuitry which is capable of receiving television signals transmitted over a plurality of different channels. At least one of the television signals is received over a first channel and includes control data relating to a second channel. A controller is also included in the digital television system, which receives the control data and which executes the process steps stored in the memory so as to control the channel switching circuitry in accordance with the control data to switch from the first channel to the second channel.

WO 00/10327 discloses an interactive television control/operating system for displaying moving pictures from a live television program or a recorded or pre-recorded item intended to be displayed on a television. There is described means operable to enlarge a prescribed area of a displayed picture. Also described is means for capturing a displayed video image, means for selecting the image to be captured and means for storing and/or printing the selected image. Also described is a system for taking a copy of images displayed on a television where said television is displaying a live program in which said images are stored in digital memory on a video segment. Also described is a method of selecting television programmes for viewing based on selecting TV programs based on what is actually watched. Also described is a means of taking audio notes utilising a remote control device operating in conjunction with the television set top box electronics.

### Summary of the Invention

In a conventional television set, video tape deck, set-top box, etc., despite the existence of two receivers or tuners, all of the receivers or tuners were controlled only through the receiving device. This is to say, it was possible to control whether receiving would be performed by the receiving device or not, and in case that receiving was to be performed, which channel should be selected, etc., only through the receiving device. Therefore, it was impossible to control the receivers from a broadcasting station, etc. as a transmitting party. So, even though the receiving device was equipped with a data storage part, no data could be freely stored by a transmitting party. Also, a transmitting party of a program could not select the programs that were shown on a display or the programs stored in a storing device.

The present invention is defined in claims 1 to 3.

In order to resolve this problem, in the present invention, the receiving device has been equipped with more than two receivers. Users can freely change the channel of one of the receivers, and cannot change a channel of another receivers, in principle. Yet, a party transmitting data, such as a program, can control it. Also, data received from another receiver can be automatically stored, where the data to control each function of receiving device itself and advertisements for companies can be stored and utilized from time to time.

### BRIEF DESCRIPTION OF THE DRAWINGS

Fig. 1 is a functional block diagram showing the receiving device of the present invention.
Fig. 2 is a block diagram showing utilization of the present invention.
Fig. 3 is a functional block diagram showing the receiving system including the present invention.
Fig. 4 is a functional block diagram showing the first receiving part of the receiving device of the present invention.
Fig. 5 is a diagram showing one example of the concepts for changing a channel with the present invention.
Fig. 6 is a diagram showing one example of the data that the second receivers receives in the present invention.
Fig. 7 is a functional block diagram showing the receiving system of the present invention.
Fig. 8 is a functional block diagram showing other examples of the present invention.
Fig. 9 is a functional block diagram showing the second receiver as another example of the present invention.
Fig. 10 is a conceptional diagram showing situations for utilization as another example of the present invention.
Fig. 11 is a flow chart to show the process of the present invention.
Fig. 12 is the other flow chart to indicate the process of the present invention.
Fig. 13 is a further flow chart to demonstrate the process of the present invention.

### DETAILED DESCRIPTION OF THE PREFERRED EMBODIMENT

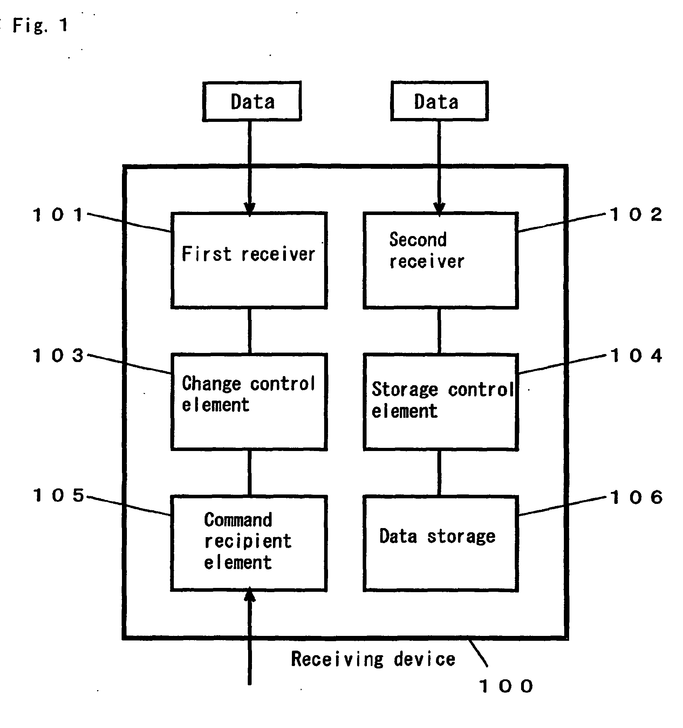

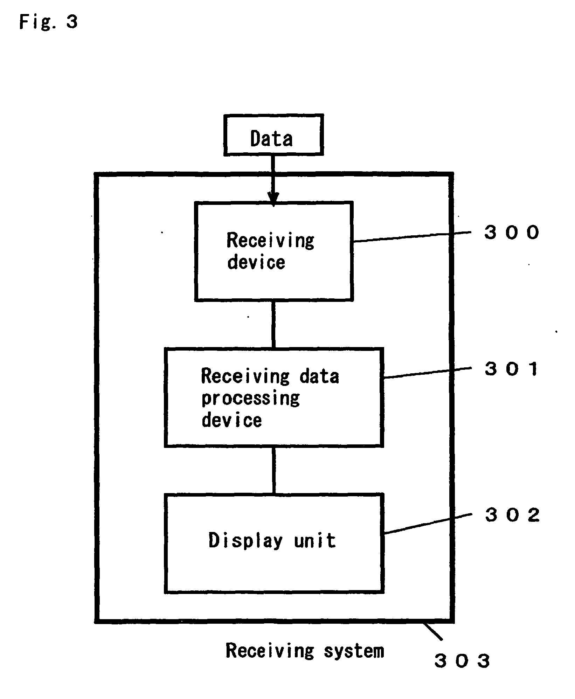

Fig. 3 is a schematic of the system, including the receiving device 300 of the present invention. The data for a program, etc. is received by the receiving device 300 of the present invention, the data received is partially stored or transmitted to the receiving data-processing device 301, and processed into a signal for presentation on a display, or processed into a voice signal. And the data is transmitted to the display unit 302, etc., where it can be displayed to be viewed and listened to by users. The present invention relates to the receiving device 300 in the receiving system 303. More specifically, the present invention relates to a receiving device shown in the functional block of Fig. 1.

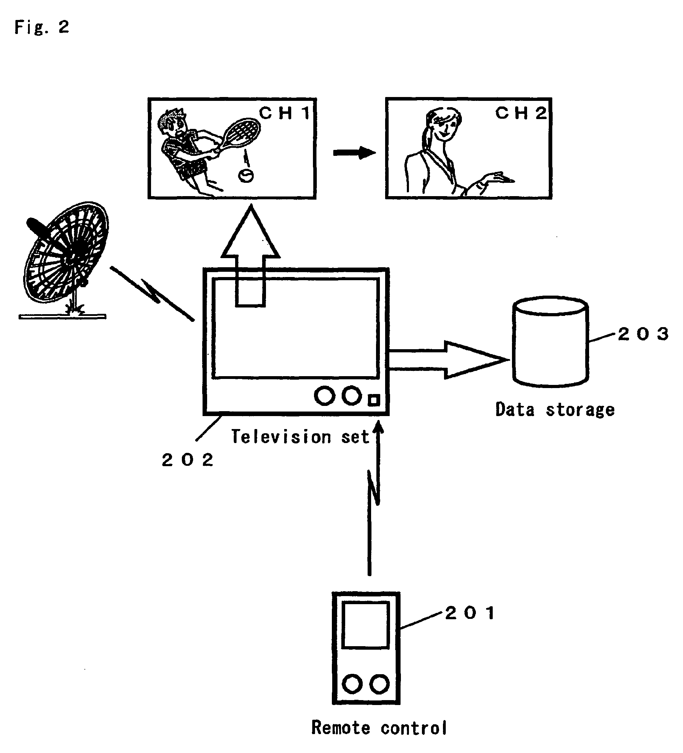

As shown in Fig. 1, the receiving device 100 of the present invention includes a first receiver or tuner 101, a second receiver 102, a command recipient element 105, a change control element 103, a storage control element 104, and a data storage 106. The first receiver 101 receives a primary data, and the second receiver 102 receives a secondary data. The primary data could be, for instance, a movie, and the secondary data could be, for example, an advertisement for an automobile owned by a leading character appearing in the movie. The data storage 106 stores the data. A hard disk, RAM, cache memory, ROM, DVD, or FDD will do for the data storage 106. The command recipient element 105 receives a command to change a channel, which the first receiver 101 receives. The storage control element 104 stores the data received by the second receiver 102 in the data storage 106. Such functions operate as shown in Fig. 2.

As shown in Fig. 2, hypothetically, the first receiver 101 receives a program on the channel 1. When users desire to change to the channel 2 on the television 202, the command to change the channel is given to the command recipient element 105 by a remote control unit, etc. The command recipient element 105 is a part to receive a signal of the remote control 201, etc., and in case that the remote control 201 is an infrared remote control, the command recipient part is an infrared light-receiving part and a signal-processing means incidental thereon, etc. When the command recipient element 105 receives a command to change a channel to the channel 2, the command to change is passed over to the change control part, and control to change the channel at the first receiving part is performed. As a result, a program of the channel 2 is also displayed on the display unit. In such case, the data received by the second receiver 102 is stored in the data storage 203.

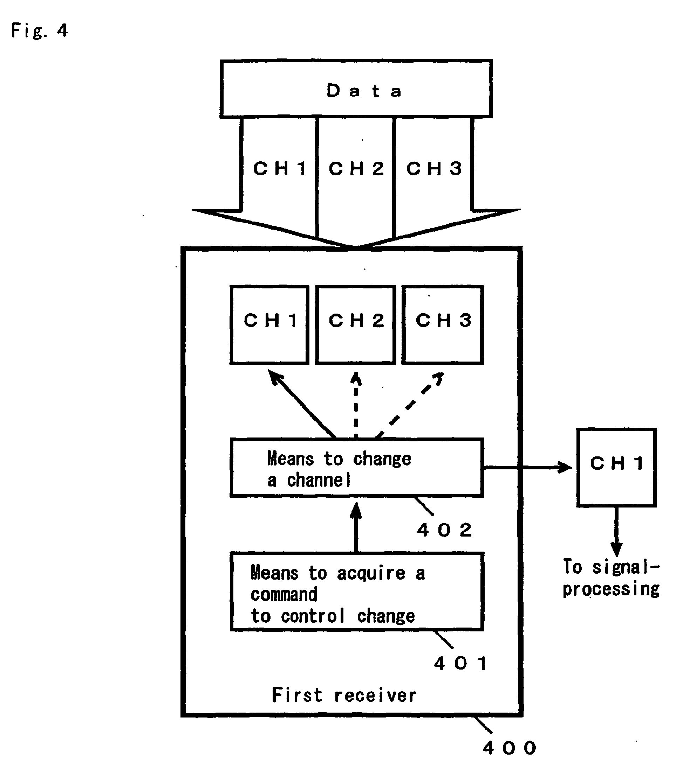

A situation where a channel at the first receiver 107 is changed by the change control element is shown in Fig. 4. For example, when the first receiver 400 is able to receive the data of the channels 1 to 3, the channel received by the receiving device can only be one of them. Therefore, the first receiver 400 must select one from among them. For this selection, the first receiver 400 has the means to acquire a command to control change 401, and the means to change a channel 402. The means to acquire a command to control change 401 acquires a command to change from the change control part, and the means to change a channel 402 changes a channel in accordance with such command to change.

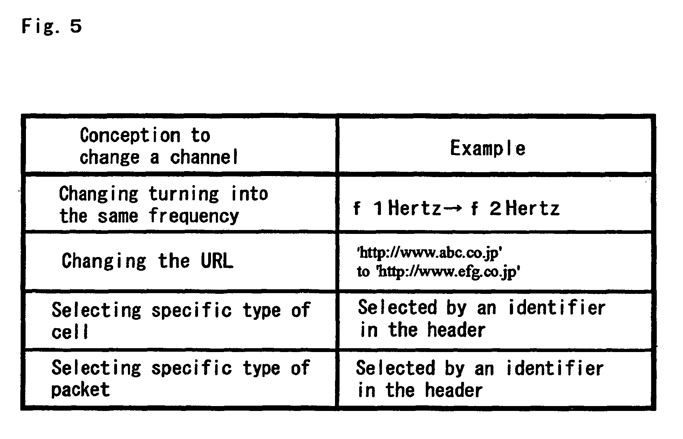

Changing a channel here means tuning into the carrier wave carrying an analog terrestrial signal, which is utilized for conventionally existing television broadcasting as shown in Fig. 5. For instance, this means that tuning into the same frequency is changed from f1 Hertz to f2 Hertz. In addition, this also includes changing the URL of a broadcasting station in the case of the internet broadcasting, for example, from 'http://www.abc.co.jp' to 'http://www.efg.co.jp.' And in case that multiple channels are multiplexed and transmitted in the TDMA method by using packet communication or ATM communication, it involves selecting the packet or cell based on the management information added to the header, etc. For example, a specific type of packet or cell is selected by an identifier, which is included in the header, etc.

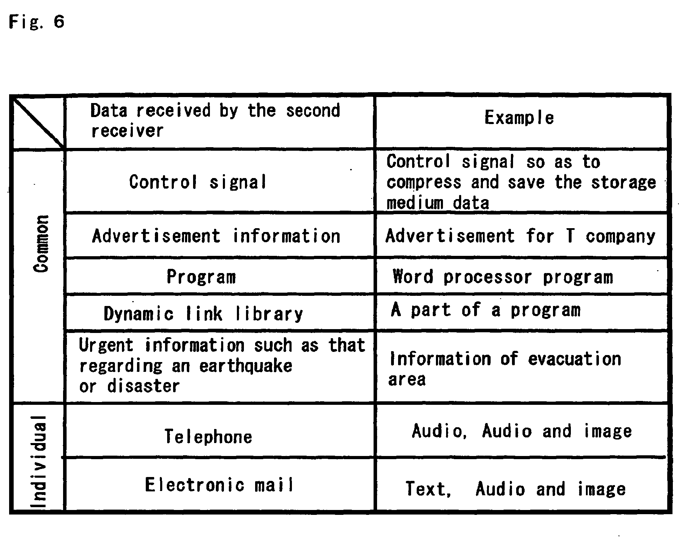

On the other hand, the second receiver receives the secondary data, which is stored in the data storage part by the storage control part. As shown in Fig. 6, the data received by the second receiver includes a control signal so as to control the functions for the receiving device, the receiving data-processing device, display unit, and the devices attached to this system, for example, a control signal so as to compress and save the storage medium data. And it includes advertisement information so as to have the users view and listen thereto by showing such information on the display unit as well as a program, for example, an advertisement for an automobile manufactured by T company. It further includes a program so as to cause the receiving device, the receiving data-processing device, the display unit, etc., to execute specific processes, for example, a program to perform the word processor function. And it includes the item which constitutes a part of a program, such as dynamic link library and the like. It further includes a signal in order to transmit urgent information such as that regarding earthquake or disaster, for instance, information about evacuation areas at the time of a disaster.

Such data is commonly transmitted from a transmitting station to the entire receiving system under the control thereof by broadcasting. Additionally, the data received at the second receiver may be an individual signal I such as a telephone signals or electronic mail exchanged among the receiving systems. The signal received at the second receiver is stored in the storage, which makes it available to access and use any time thereafter. Additionally it creates an effect that makes it possible to use such signal as many times as possible, not only once, as long as it is stored.

For instance, once an urgent signal is stored, such as one regarding earthquakes or disasters, even if a broadcasting function such as a broadcasting station is suspended, it is possible to access such signal, and it is convenient for information that is necessary to confirm several times, such as guidance to evacuation areas, or information about the range of the disaster. Additionally, advertisement information for a company will not be changed every time it is shown on the display, and once it is stored, it is possible to access it from the storage device any time thereafter, and show it on the display conveniently.

Causing this type of information to be included and transmitted in the data received by the first receiver, it may be possible to believe that the information is received at one receiving device, is signal-processed internally, and is processed. However, a program, etc. is organized at a broadcasting station once and a reconfigured signal is transmitted, in order to pass the management signal, advertisement, or urgent information to the broadcasting station, and make a reconfiguration thereof. This is inconvenient in that it takes a large amount of time and effort.

Furthermore, control of the first receiver is basically entrusted to users. Therefore, in order to cause anyone to view and listen to content which must be to viewed and listened to, such as urgent information, it would be more convenient to separate the receiving device into more than two elements, and control them separately from the device receiving the data, such as general programs. It is convenient to use a configuration such that users cannot exercise a control such as changing the channel of the second receiver, etc., for example.

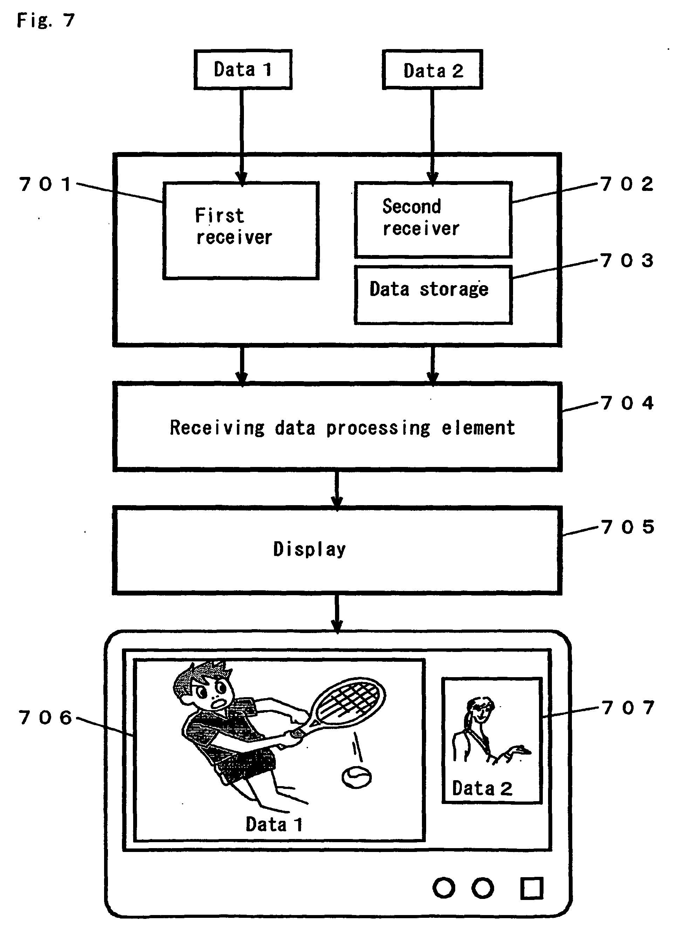

Fig. 7 shows a case where the data received by the second receiver 702 is an advertisement for a company. The data 1 (706) received by the first receiver 701 is shown as a program on a large part of the display, for instance, in an area comprising 70-90% thereof, via the receiving data-processing element 704 and the display 705, and users view and listen thereto. At the same time, the data 2 (707) received by the second receiver 702 is stored in the data storage 703, is transmitted to the receiving data-processing element 704, and is shown on the remaining part of the area not occupied by the data 1 (706), via the display 705.

Because such data is an advertisement, it is shown on the display to the extent that it does not disturb the viewing and listening to a program by users. Regarding this advertisement for a company, the data is received by the second receiver 702, and may be displayed simultaneously therewith. Alternatively, after the data is stored in the data storage 703 once, the data may be displayed. Therefore, even when the second receiver 702 does not receive the advertisement, the data can be viewed on the display by extracting the data from the data storage 703.

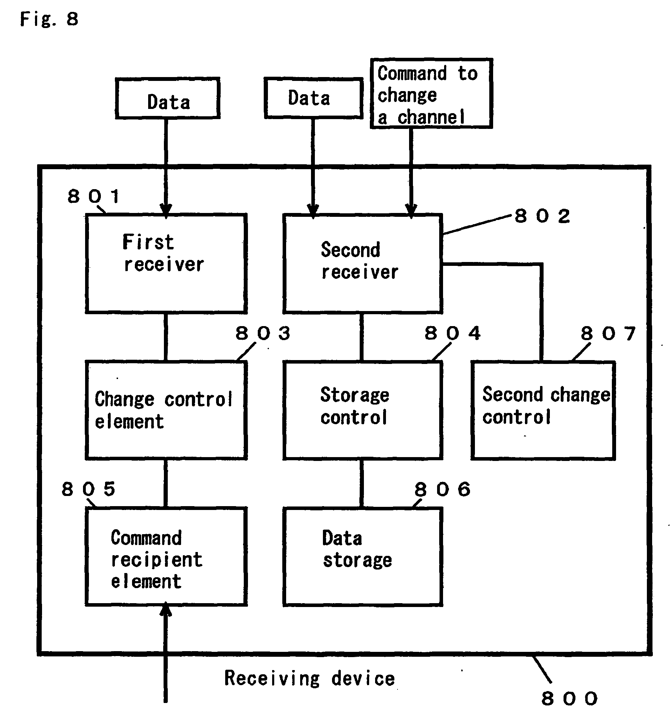

Next, the data reception by the secondary data receiving part and a command to change a channel is explained. As shown in Fig. 8, the receiving device includes a first receiver 801, a second receiver 802, a change control element 803, a storage control 804, a command recipient element 805, a data storage 806, and a second change control 807. The second receiver 802 receives data and a command to change a channel. A command to change a channel relates to the second receiver 802. The basic functions of the first receiver 801, the change control element 803, the command recipient element 805, the storage control 804, and the data storage 806 are the same as the functions of the receiving device, which has been explained hereinabove.

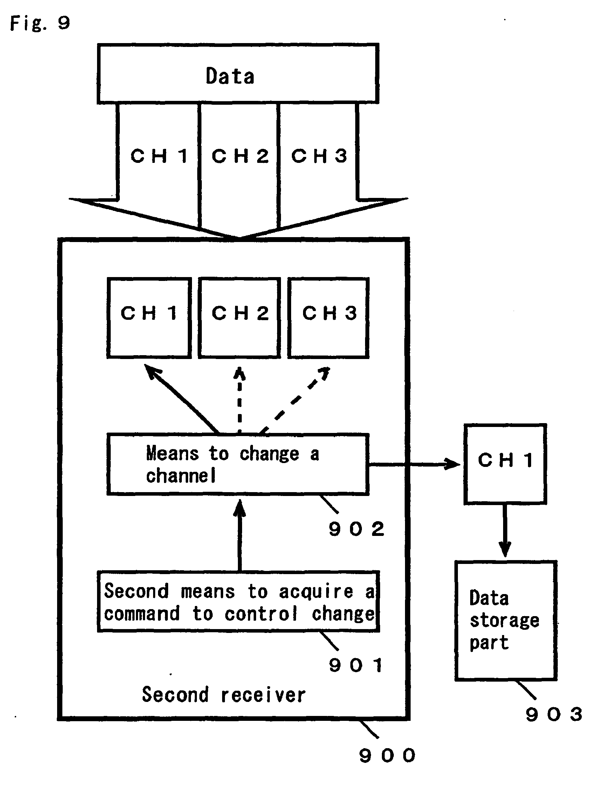

The second receiver 802 receives data and a command to change a channel, and the second change control element 807 controls the changing of a channel of the second receiver 802 based on the command to change a channel received at the second receiver 802. The second receiver 802 receives a signal from the second change control element 807, and performs the changing of a channel by configuration shown in Fig. 9. As shown in Fig. 9, the second receiver 900 is composed of the second means to acquire a command to control change 901 from the second change control part and a means to change a channel 902 based on a command to change from the second means to acquire a command to control change 901. In case that channel 1 is selected by the means to change a channel 902, the data of channel 1 is stored in the data storage part 903. When a channel is changed, data concerning the channel which has been changed is stored in the data storage part 903.

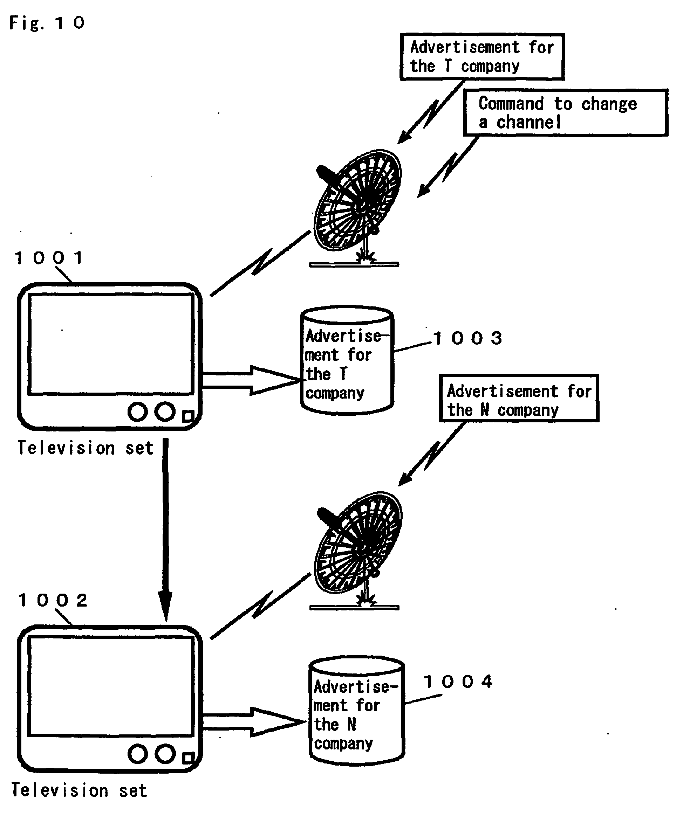

This situation is shown in Fig. 10. In case that the receiving system including the receiving device is a television set, the second receiver of the receiving device for the television set 1001 initially receives the data of the advertisement for the T company, and stores the data at the data storage 1003. However, receiving a command to change a channel at the second receiver of the receiving device for the television 1002, a channel will be changed to the channel of the advertisement for the N company, such data will be received, and be stored in the data storage 1004. In the meantime, a program not related to the advertisement may be displayed on the television set. Alternatively, while the advertisement for the T company is initially displayed, and with a command to change a channel, a process for the advertisement of the N company to be displayed may be made. In addition, the form of the implementation of this invention indicated above shows an example of this invention, and is not given with the purpose of restricting the scope of rights for this invention. The scope of rights for this invention is not limited by such examples, and includes all forms of implementation that are applicable.

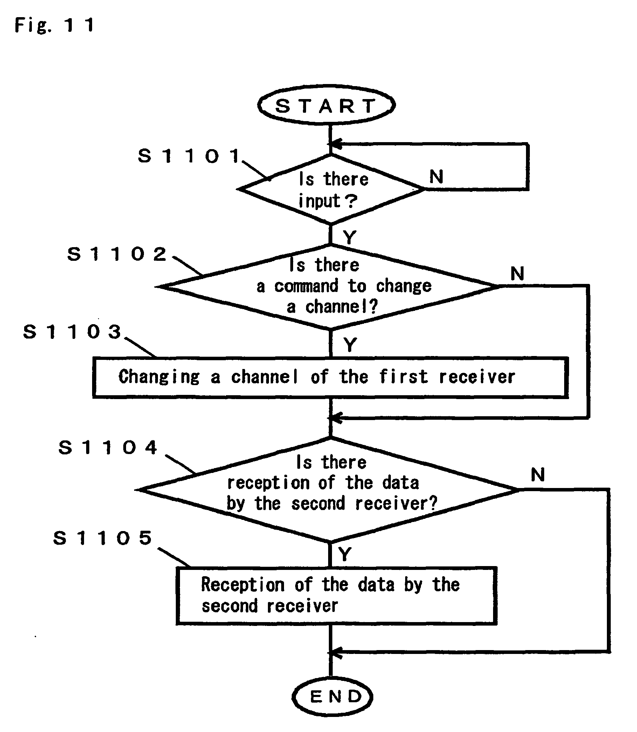

Next, the control method for the receiving device is explained. As shown in Fig. 11, firstly, an input for receiving is waited for (Step S1101), and after the input is made, it is determined whether a command to change a channel is made or not (Step S1102). After the command to change a channel is made, a channel of the first receiver is changed(Step S1103). Secondly, it is determined whether there is reception of the data by the second receiver (Step S 1104), and in case that there is reception of the data, such data is received (Step S 1105), and the processing is completed.

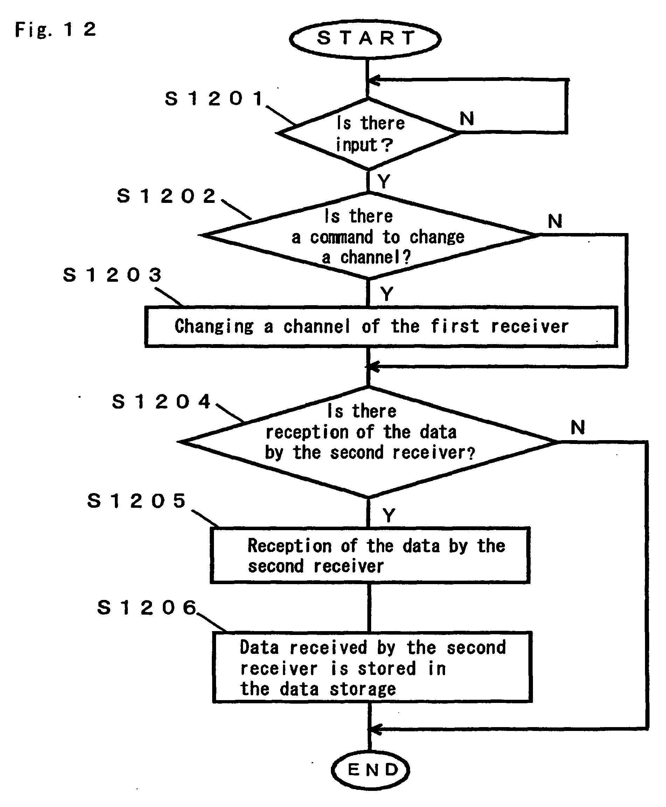

Also, as shown in Fig. 12, the data received by the second receiver may always be stored in the data storage. The process indicated in Fig. 12 shows that an input for receiving is waited for (Step S 1201), and after the input is made, it is determined whether a command to change a channel is made or not (Step S1202). After the command to change a channel is made, a channel of the first receiver is changed (Step S1203). Secondly, it is determined whether data of the second receiving part is received (Step S 1204). In case that there is reception of the data, such data is received (Step S 1205), and the received data is stored at the data storage (Step S 1206), and the processing is completed.

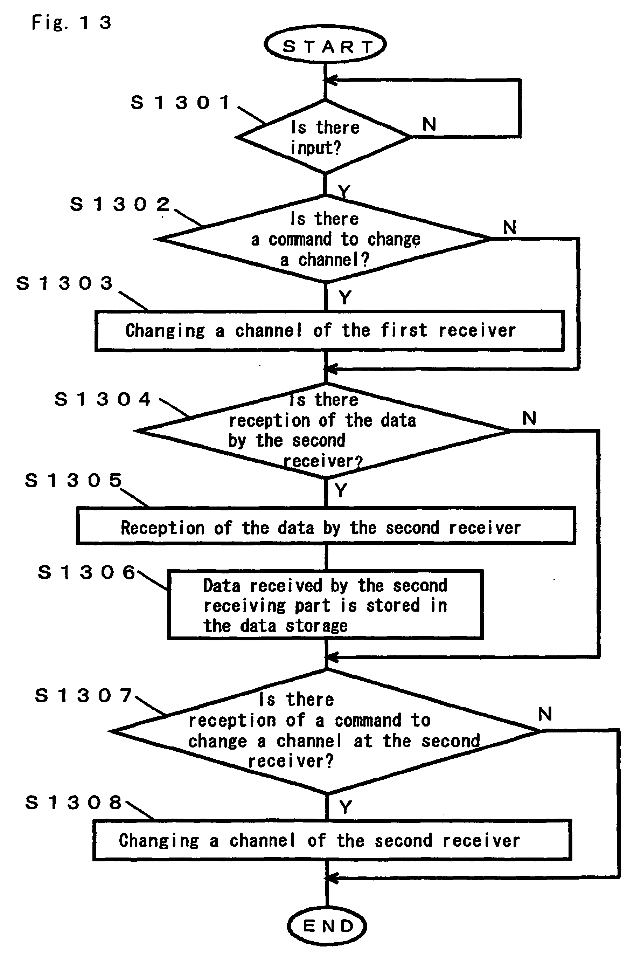

Fig. 13 explains a case where a signal to change a channel is received by the second receiver is received at the second receiver. An input for receiving is waited for (Step S 1301), and after the input is made, it is determined whether a command to change a channel is made or not (Step S1302). After the command to change a channel is made, a channel of the first receiver is changed (Step S1303). Secondly, it is determined whether there is reception of the data of the second receiver (Step S 1304), and in case that there is reception of the data, such data is received (Step S 1305) and the received data is stored at the data storage (Step S 1306). Furthermore, it is determined whether there is reception of a command to change a channel at the second receiver (Step S 1307), and in case that there is reception, a channel of the second receiver is changed (Step S 1308), and the processing is completed.

Such processes are not necessarily performed at the receiving device or receiving system, and may be performed at peripheral equipment incidental thereon. In addition, it would be convenient to allow the program to execute the processes shown in Fig. 11 through Fig. 13 to be the recording medium, which is recorded to be readable by computer. The definition of being readable by computer includes being readable by the receiving system or the receiving device.

The present invention can receive a signal to control the receiving device itself or an advertisement for a company, in addition to programs for viewing and listening to. Therefore, it is possible for a transmitting party of the program to control the receiving device and the receiving system itself. For instance, despite the presence of a program that is viewed and listened to, it is possible to show the advertisement for a company on the display.

## Claims

1. A television receiving device equipped with:
a first receiver (801) adapted to receive data through a first one of a plurality of selectable channels, said first receiver being adapted to perform said selection of a channel in response to a first channel selection command by tuning into the carrier wave carrying an analog terrestrial signal which is utilized for conventionally existing television broadcasting;
a second receiver (802) adapted to receive data through a second one of a plurality of selectable channels, said second receiver further being adapted to perform said selection of a channel in response to a second channel selection command by tuning into the carrier wave carrying an analog terrestrial signal which is utilized for conventionally existing television broadcasting;
a data storage (806) storing data received by said second receiver;
a command recipient element (805) receiving said first channel selection command to select a channel, said first channel selection command being inputted by a user;
a change control element (803) changing a channel received at said first receiver when said first channel selection command to change a channel is received by said command recipient element (805);
a second change control element (807) changing a channel received at said second receiver when a second channel selection command to change a channel is received at said second receiver (802) through said second one of said plurality of selectable channels;
a storage control element (804) storing the data received by said second receiver in said data storage, wherein
said first and second channels each independently receive data and the second receiver is configured such that users cannot exercise control to change the channel of the second receiver.

2. A method for controlling a television receiving device equipped with a first receiver (801) adapted to receive data through a first one of a plurality of selectable channels, said first receiver being adapted to perform said selection of a channel in response to a first channel selection command by tuning into the carrier wave carrying an analog terrestrial signal which is utilized for conventionally existing television broadcasting; a second receiver (802) adapted to receive data through a second one of a plurality of selectable channels, said second receiver further being adapted to perform said selection of a channel in response to a second channel selection command by tuning into the carrier wave carrying an analog terrestrial signal which is utilized for conventionally existing television broadcasting; and a data storage (806) storing data received by said second receiver; said method comprising:
receiving by a command recipient element (805) said first channel selection command to select a channel, said first channel selection command being inputted by a user;
changing by a change control element (803) a channel received at said first receiver when said first channel selection command to change a channel is received by said command recipient element (805);
changing by a second change control element (807) a channel received at said second receiver when a second channel selection command to change a channel is received at said second receiver (802) through said second one of said plurality of selectable channels;
storing by a storage control element (804) the data received by said second receiver in said data storage, wherein
said first and second channels each independently receive data and the second receiver is configured such that users cannot exercise control to change the channel of the second receiver.

3. A computer program which when being executed on a computer enables said computer to carry out a method according to claim 2.

## Patentansprüche

1. Fernsehempfangsvorrichtung mit:
einem ersten Empfänger (801), der angepasst ist, Daten durch einen ersten einer Mehrzahl von auswählbaren Kanälen zu empfangen, wobei der erste Empfänger angepasst ist, die Auswahl eines Kanals in Antwort auf einen ersten Kanalauswahlbefehl auszuführen, indem auf die Trägerwelle abgestimmt wird, die ein analoges terrestrisches Signal trägt, das für konventionell existierende Fernsehübertragung verwendet wird;
einem zweiten Empfänger (802), der angepasst ist, Daten durch einen zweiten einer Mehrzahl von auswählbaren Kanälen zu empfangen, wobei der zweite Empfänger ferner angepasst ist, die Auswahl eines Kanals in Reaktion auf einen zweiten Kanalauswahlbefehl auszuführen, indem auf die Trägerwelle abgestimmt wird, die ein analoges terrestrisches Signal trägt, das für konventionell existierende Fernsehübertragung verwendet wird;
einem Datenspeicher (806), der Daten speichert, die von dem zweiten Empfänger empfangen werden;
einem Befehlsempfangselement (805), das den ersten Kanalauswahlbefehl empfängt, um einen Kanal auszuwählen, wobei der erste Kanalauswahlbefehl durch einen Benutzer eingegeben wird;
einem Wechselsteuerelement (803), das einen an dem ersten Empfänger empfangenen Kanal wechselt, wenn der erste Kanalauswahlbefehl zum Wechseln eines Kanals durch das Befehlsempfangselement (805) empfangen wird;
einem zweiten Wechselsteuerelement (807), das einen Kanal, der an dem zweiten Empfänger empfangen wird, wechselt, wenn ein zweiter Kanalauswahlbefehl zum Wechseln eines Kanals an dem zweiten Empfänger (802) durch den zweiten der Mehrzahl von auswählbaren Kanälen empfangen wird;
einem Speichersteuerelement (804), das die Daten, die von dem zweiten Empfänger empfangen werden, in dem Datenspeicher speichert, wobei
die ersten und zweiten Kanäle jeweils unabhängig Daten empfangen und der zweite Empfänger so konfiguriert ist, dass Benutzer keine Kontrolle zum Wechsel des Kanals des zweiten Empfängers ausüben können.

2. Verfahren zum Steuern einer Fernsehempfangsvorrichtung, die mit einem ersten Empfänger (801) ausgerüstet ist, der angepasst ist, Daten über einen ersten einer Mehrzahl von auswählbaren Kanälen zu empfangen, wobei der erste Empfänger angepasst ist, die Auswahl eines Kanals in Reaktion auf einen ersten Kanalauswahlbefehl durchzuführen, indem auf die Trägerwelle abgestimmt wird, die ein analoges terrestrisches Signal trägt, das für konventionell existierende Fernsehübertragung verwendet wird; einem zweiten Empfänger (802), der angepasst ist, Daten durch einen zweiten einer Mehrzahl von auswählbaren Kanälen zu empfangen, wobei der zweite Empfänger ferner angepasst ist, die Auswahl eines Kanals in Reaktion auf einen zweiten Kanalauswahlbefehl durchzuführen, indem auf die Trägerwelle abgestimmt wird, die ein analoges terrestrisches Signal trägt, das für konventionell existierende Fernsehübertragung verwendet wird; und einem Datenspeicher (806), der Daten speichert, die von dem zweiten Empfänger empfangen werden; wobei das Verfahren aufweist:
Empfangen des ersten Kanalauswahlbefehls zum Auswählen eines Kanals durch das Befehlsempfangselement (805), wobei der erste Kanalauswahlbefehl durch einen Benutzer eingegeben wird;
Wechseln eines Kanals durch ein Wechselsteuerelement (803), wobei der Kanal an dem ersten Empfänger empfangen wird, wenn der erste Kanalauswahlbefehl zum Wechseln eines Kanals von dem Befehlsempfangselement (805) empfangen wird;
Wechseln eines Kanals durch ein zweites Wechselsteuerelement (807) an dem zweiten Empfänger, wenn ein zweiter Kanalauswahlbefehl zum Wechseln eines Kanals an dem zweiten Empfänger (802) durch den zweiten der Mehrzahl von auswählbaren Kanälen empfangen wird;
Speichern mittels eines Speichersteuerelements (804) der Daten, die durch den zweiten Empfänger empfangen werden, in dem Datenspeicher, wobei
die ersten und zweiten Kanäle unabhängig Daten empfangen und der zweite Empfänger konfiguriert ist, so dass Benutzer keine Kontrolle zum Wechseln des Kanals des zweiten Empfängers ausüben können.

3. Computerprogramm, das wenn es auf einem Computer ausgeführt wird, den Computer in die Lage versetzt, ein Verfahren gemäß Anspruch 2 auszuführen.

## Revendications

1. Poste récepteur de télévision équipé de :
un premier récepteur (801) adapté pour recevoir des données à travers un premier canal d'une pluralité de canaux sélectionnables, ledit premier récepteur étant adapté pour effectuer ladite sélection d'un canal en réponse à une première commande de sélection de canal en syntonisant avec l'onde porteuse qui achemine un signal terrestre analogique utilisé pour la diffusion télévisuelle existante conventionnelle ;
un second récepteur (802) adapté pour recevoir des données à travers un second canal d'une pluralité de canaux sélectionnables, ledit second récepteur étant en outre adapté pour effectuer ladite sélection d'un canal en réponse à une seconde commande de sélection de canal en syntonisant avec l'onde porteuse qui achemine un signal terrestre analogique utilisé pour la diffusion télévisuelle existante conventionnelle ;
un stockage de données (806) stockant des données reçues par ledit second récepteur ;
un élément destinataire de commande (805) recevant ladite première commande de sélection de canal pour sélectionner un canal, ladite première commande de sélection de canal étant entrée par un utilisateur ;
un élément de contrôle de changement (803) changeant un canal reçu au niveau dudit premier récepteur lorsque ladite première commande de sélection de canal pour changer un canal est reçue par ledit élément destinataire de commande (805) ;
un second élément de contrôle de changement (807) changeant un canal reçu au niveau dudit second récepteur lorsqu'une seconde commande de sélection de canal pour changer un canal est reçue au niveau dudit second récepteur (802) à travers ledit second canal de ladite pluralité de canaux sélectionnables ;
un élément de contrôle de stockage (804) stockant les données reçues par ledit second récepteur dans ladite stockage de données, dans lequel
ledit premier et ledit second canaux reçoivent chacun indépendamment des données et le second récepteur est configuré de telle manière que des utilisateurs ne puissent pas exercer un contrôle pour changer le canal du second récepteur.

2. Procédé pour contrôler un poste récepteur de télévision équipé d'un premier récepteur (801) adapté pour recevoir des données à travers un premier canal d'une pluralité de canaux sélectionnables, ledit premier récepteur étant adapté pour effectuer ladite sélection d'un canal en réponse à une première commande de sélection de canal en syntonisant avec l'onde porteuse qui achemine un signal terrestre analogique utilisé pour la diffusion télévisuelle existante conventionnelle ; un second récepteur (802) adapté pour recevoir des données à travers un second canal d'une pluralité de canaux sélectionnables, ledit second récepteur étant en outre adapté pour effectuer ladite sélection d'un canal en réponse à une seconde commande de sélection de canal en syntonisant avec l'onde porteuse qui achemine un signal terrestre analogique utilisé pour la diffusion télévisuelle existante conventionnelle ; et un stockage de données (806) stockant des données reçues par ledit second récepteur; ledit procédé comprenant les étapes consistant à :
recevoir par un élément destinataire de commande (805) ladite première commande de sélection de canal pour sélectionner un canal, ladite première commande de sélection de canal étant entrée par un utilisateur ;
changer par un élément de contrôle de changement (803) un canal reçu au niveau dudit premier récepteur lorsque ladite première commande de sélection de canal pour changer un canal est reçue par ledit élément destinataire de commande (805) ;
changer par un second élément de contrôle de changement (807) un canal reçu au niveau dudit second récepteur lorsqu'une seconde commande de sélection de canal pour changer un canal est reçue au niveau dudit second récepteur (802) à travers ledit second canal de ladite pluralité de canaux sélectionnables ;
stocker par un élément de contrôle de stockage (804) les données reçues par ledit second récepteur dans ladite stockage de données, dans lequel
ledit premier et ledit second canaux reçoivent chacun indépendamment des données, et le second récepteur est configuré de telle manière que des utilisateurs ne puissent pas exercer un contrôle pour changer le canal du second récepteur.

3. Programme informatique qui, lorsqu'il est exécuté sur un ordinateur, permet audit ordinateur d'exécuter un procédé selon la revendication 2.
